# EUROPÄISCHE PATENTSCHRIFT

(11) **EP 0 828 586 B1**
(45) Veröffentlichungstag und Bekanntmachung des Hinweises auf die Patenterteilung: **20.09.2000**
(21) Anmeldenummer: 96914876.6
(22) Anmeldetag: 03.04.1996
(51) Int. Cl.: B25B 5/00, B23K 37/04, B21D 43/00

(54) **VORRICHTUNG ZUM EINSPANNEN VON BAUTEILEN, INSBESONDERE VON BLECHEN IM ZUGE EINER SCHWEISS- ODER MONTAGESTRASSE**
DEVICE FOR CLAMPING PARTS, IN PARTICULAR METAL SHEETS, IN A WELDING OR MOUNTING LINE
DISPOSITIF DE SERRAGE DE PIECES, NOTAMMENT DE TOLES, PENDANT LEUR TRANSPORT DANS UNE CHAINE DE MONTAGE OU DE SOUDAGE

(30) Priorität: 01.06.1995 DE 29509049 U
(43) Veröffentlichungstag der Anmeldung: 18.03.1998
(73) Patentinhaber: Thyssen Krupp Industries AG, 45128 Essen (DE)
(72) Erfinder: KIPPING, Josef, D-66839 Schmelz (DE)
(74) Vertreter: Dahlkamp, Heinrich-Leo, Dipl.-Ing.
(86) Internationale Anmeldenummer: EP9601457
(87) Internationale Veröffentlichungsnummer: WO9638265

(56) Entgegenhaltungen:
- WO-A-83/03567
- DE-A- 4 037 616
- DE-U- 8 427 261
- DE-U- 9 208 559
- FR-A- 1 013 807
- FR-A- 2 651 165
- GB-A- 1 466 434
- US-A- 2 497 943
- US-A- 2 763 053
- US-A- 3 765 666
- US-A- 5 033 710

## Beschreibung

Die Erfindung betrifft eine Vorrichtung zum Einspannen von Bauteilen, insbesondere von Blechen im Zuge einer Kfz-Montagestraße, mit einer Konsole, bestehend aus einem fußseitigen Aufspannbock, einer auf einem oberen Widerlage der Konsole befestigbaren Auflage für die Bauteile und einem am Widerlager der Konsole gehaltenen Pneumatikspanner, der ein gegen die auf der Auflage befindlichen Bauteile spannbares Druckstück betätigt.

Derartige Vorrichtungen werden insbesondere im Karosseriebau der Automobilindustrie eingesetzt, um miteinander zu verschweißende Bleche automatisch einzuspannen. Im Zuge einer Montagestraße ist eine Vielzahl derartiger Vorrichtungen angeordnet. Jede dieser Vorrichtungen muß nach Maßgabe der jeweils erforderlichen räumlichen Anordnung der einzuspannenden Bleche konstruiert sein. Das ist aufwendig.

Aus der GB,A,1 466 434 ist eine gattungsgemäße Vorrichtung zum Einspannen von Bauteilen bekannt, wobei die zu spannenden Bauteile in Fixierbohrungen aufgenommen und die Spannkonsolen dem Einsatzfall entsprechend manuell ausgerichtet, auf einer Meßmaschine eingemessen und durch Anschweißen fixiert werden. Insbesondere das manuelle Nachjustieren ist hierbei sehr aufwendig.

Aufgabe der Erfindung ist es deshalb, eine Vorrichtung der eingangs beschriebenen Gattung so zu verbessern, daß die Konsole nach Maßgabe verschiedener räumlicher Anordnungen der Spannstelle zwischen Auflage und Druckstück aus wenigen Bauelementen gefertigt werden kann, wobei ein manuelles Nachjustieren nicht erforderlich ist.

Diese Aufgabe wird durch eine Vorrichtung gemäß Anspruch 1 gelöst. Erfindungsgemäß wird die Konsole der Vorrichtung aus mehreren vorgefertigten Bauteilen hergestellt. Die Bauteile können so angeordnet und zueinander ausgerichtet werden, daß die Spannstelle zwischen Auflage und Druckstück die jeweils erforderliche Lage einnimmt. Insbesondere kann die Stütze aus einem Halbzeugmaterial gefertigt werden, dessen Länge nach Bedarf zugeschnitten wird. Das alles führt zu einer wesentlichen Vereinfachung der Herstellung und Verringerung der damit verbundenen Kosten.

Vorzugsweise sollte der Aufspannbock eine vertikale Anschlußfläche für das Zentrierstück aufweisen. Dann kann das Zentrierstück für die Stütze in unterschiedlichen Winkelpositionen an dieser vertikalen Anschlußfläche befestigt werden, so daß die Stütze bei Bedarf nicht nur vertikal, sondern auch in einem Winkel zur Vertikalen ausgerichtet werden kann.

In Kombination dazu oder unabhängig davon kann der Aufspannbock auch eine gegen die Vertikale geneigte Anschlußfläche für das Zentrierstück aufweisen, so daß ein zusätzlicher Freiheitsgrad für die Anordnung des Zentrierstücks vorhanden ist.

Für Ausführungen, bei denen die Orientierung der Stütze unverändert bleibt, können der Aufspannbock und das Zentrierstück auch einteilig ausgebildet sein.

Bei einer bevorzugten Ausführung der Erfindung ist die Stütze ein Rohr, insbesondere ein Präzisionsstahlrohr. Zur Zentrierung dieses Rohres sollten das Zentrierstück und das Widerlager Zentrierflächen aufweisen, die sich parallel zur Längsachse des Rohres erstrecken.

Im folgenden werden in der Zeichnung dargestellte Ausführungsbeispiele der Erfindung erläutert; es zeigen:
- Figur 1: schematisch eine Seitenansicht einer Vorrichtung zum Einspannen von Bauteilen,
- Figur 2: den Gegenstand nach Figur 1 in perspektivischer Darstellung,
- Figur 3: schematisch eine Seitenansicht einer anderen Ausführung des Gegenstandes nach Figur 1,
- Figur 4: den Gegenstand nach Figur 3 in perspektivischer Darstellung.

Die in der Zeichnung dargestellte Vorrichtung dient zum Einspannen von Blechen im Zuge einer Kfz-Montagestraße. Sie besteht in ihrem grundsätzlichen Aufbau aus einer an einem nicht dargestellten Fundament befestigbaren Konsole 1, die oberseitig ein Widerlager 2 trägt, auf dem eine Auflage 3 für die einzuspannenden Bauteile 4 befestigt ist. Seitlich am Widerlager 2 wird ein Pneumatikspanner 5 befestigt, der ein Druckstück 6 betätigt, welches die Bauteile 4 gegen die Auflage 3 spannt.

Die Konsole besteht bei der dargestellten Ausführung aus einzelnen, miteinander verbundenen Bauteilen, nämlich einem fußseitigen Aufspannbock 7, einem Zentrierstück 8, einer Stütze 9 und einer unterseitig an das Widerlager angeschlossenen Zentrierung 10 für die Stütze 9.

Die Stütze 9 besteht bei den dargestellten Ausführungsbeispielen aus einem Präzisionsstahlrohr, dessen Länge nach Bedarf zugeschnitten wird. Das Zentrierstück 8 und die Zentrierung 10 des Widerlager 2 besitzen dem Durchmesser der Stütze 9 angepaßte Zentrierflächen 11, 13, die sich parallel zur Rohrachse erstrecken. Alle insoweit beschriebenen Bauteile sind miteinander verschraubt.

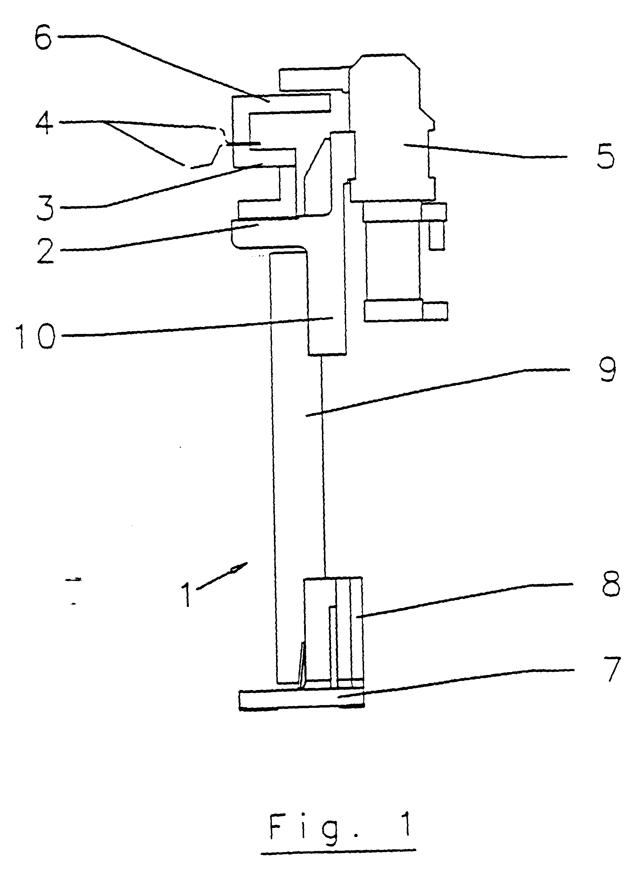

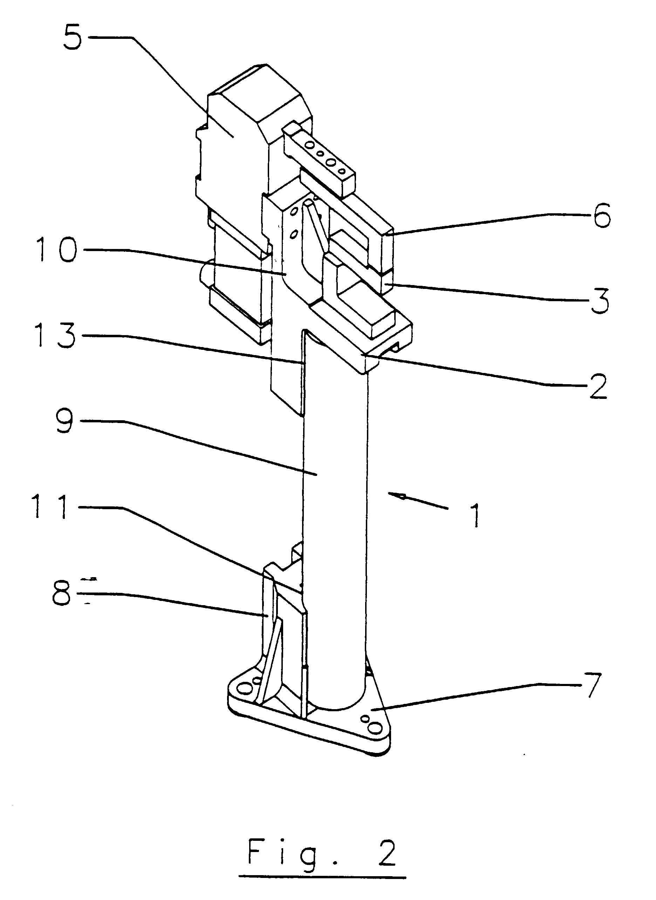

Bei der in den Figuren 1 und 2 dargestellten Ausführung sind der Aufspannbock 7 und das Zentrierstück 8 ein einheitliches Bauteil. Die Zentrierflächen 11, 13 des Zentrierstücks 8 und der Zentrierung 10 am Widerlager 2 erstrecken sich in vertikaler Richtung, so daß die Konsole 1 vertikal ausgerichtet ist.

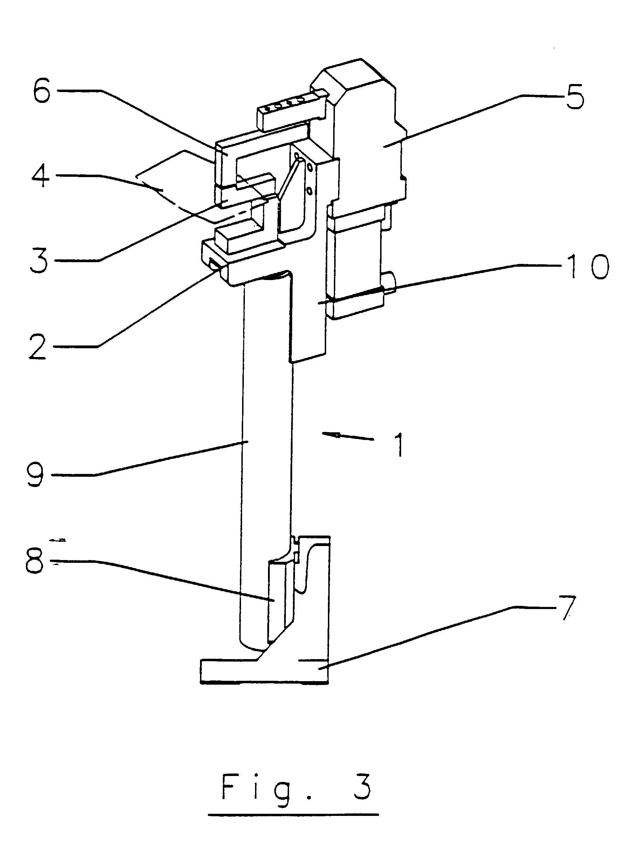

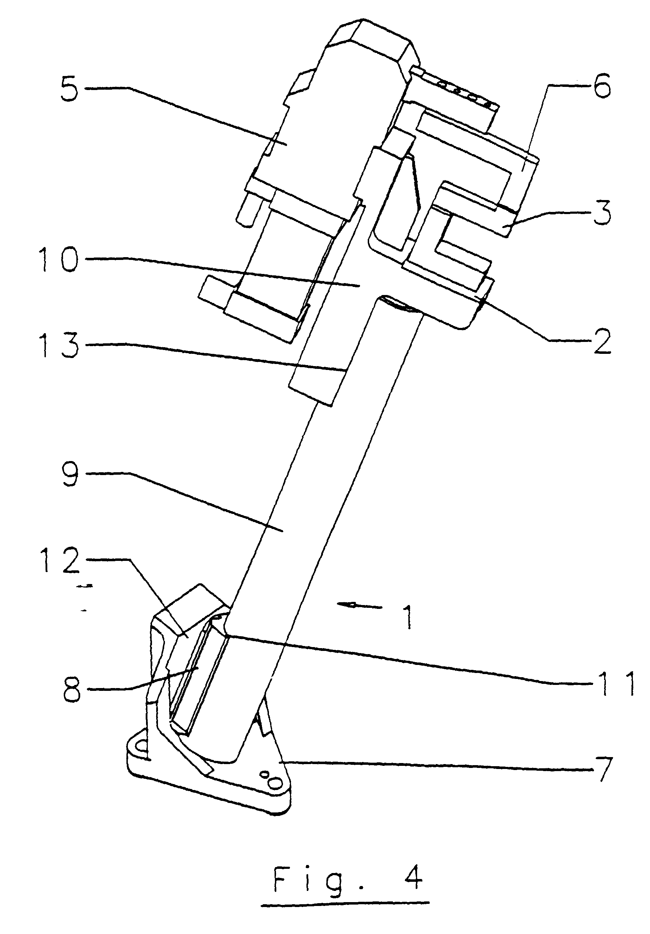

Bei der in den Figuren 3 und 4 wiedergegebenen Ausführung sind der Aufspannbock 7 und das Zentrierstück 8 voneinander unabhängige Bauteile. Der Aufspannbock 7 weist eine vertikale Anschlußfläche 12 auf, an der das Zentrierstück 8 in unterschiedlichen Winkelstellungen befestigbar ist. Zusätzlich weist der Aufspannbock 7 eine weitere, gegen die Vertikale geneigte Aufspannfläche auf, an der gegebenenfalls das Zentrierstück 8 ebenfalls mit unterschiedlichen Winkelstellungen befestigbar ist. Dementsprechend kann die Konsole 1 bereits bei der Herstellung der Vorrichtung nach Maßgabe der räumlichen Lage der Spannstelle zwischen dem Auflager 3 und dem Druckstück 6 räumlich ausgerichtet werden.

### Bezugszeichenliste

- 1: Konsole
- 2: Widerlager
- 3: Auflage
- 4: Bauteile
- 5: Pneumatikspanner
- 6: Druckstück
- 7: Aufspannbock
- 8: Zentrierstück
- 9: Stütze
- 10: Zentrierung
- 11: Zentrierflächen
- 12: Anschlußfläche
- 13: Zentrierflächen

## Patentansprüche

1. Vorrichtung zum Einspannen von Bauteilen (4), insbesondere von Blechen im Zuge einer Montagestraße, mit einer Konsole (1), bestehend aus mehreren vorgefestigten, miteinander verbundenen Bauteilen, nämlich einem fußseitigen Aufspannbock (7), einer auf einem oberen Widerlager (2) der Konsole (1) befestigbaren Auflage (3) für die Bauteile (4), einem am Widerlager (2) der Konsole (1) gehaltenen Pneumatikspanner (5), der ein gegen die auf der Auflage (3) befindlichen Bauteile (4) spannbares Druckstück (6) und einer Stütze (9) betätigt, **dadurch gekennzeichnet**, daß der Aufspannbock (7) ein Zentrierstück (8) für die daran befestigbare Stütze (9) aufweist, das Widerlager (2) unterseitig als Zentrierung für die daran befestigbare Stütze (9) ausgebildet ist, das Zentrierstück (8) und das Widerlager (2) Zentrierflächen (11/13) aufweisen, die sich parallel zur Längsachse der Stütze (9) erstrecken und daß die Länge der Stütze (9) nach Bedarf zugeschnitten wird.

2. Vorrichtung nach Anspruch 1, **dadurch gekennzeichnet**, daß der Aufspannbock (7) eine vertikale Anschlußfläche (12) für das Zentrierstück (8) besitzt.

3. Vorrichtung nach Anspruch 1 oder 2, **dadurch gekennzeichnet**, daß der Aufspannbock (7) eine gegen die Vertikale geneigte Anschlußfläche für das Zentrierstück (8) aufweist.

4. Vorrichtung nach Anspruch 1, **dadurch gekennzeichnet**, daß der Aufspannbock (7) und das Zentrierstück (8) einteilig ausgebildet sind.

5. Vorrichtung nach einem der Ansprüche 1 bis 4, **dadurch gekennzeichnet**, daß die Stütze (9) ein Rohr ist.

## Claims

1. A device for clamping components (4), in particular metal plates within an assembly line, with a bracket (1), composed of a plurality of prefabricated components connected to one another, namely of a foot-side clamping frame (7), a support (3) that can be fastened to an upper abutment (2) of the bracket (1) for the components (4), a pneumatic tensioner (5), which is held at the abutment (2)of the bracket (1) and actuates a pressure piece (6) that can be tensioned against the components (4) located on the support (3) and a prop (9), wherein said clamping frame (7) is provided with a centering piece (8) for the prop (9) which can be fastened thereto, and wherein said abutment (2) is designed and built underside as a centering means for the prop (9) affixable thereto, and wherein said centering piece (8) and the abutment (2) are provided with centering surfaces (11/13) extending in parallel to the longitudinal axis of the prop (9), and wherein the length of the prop (9) is cut to suit depending on demand.

2. A device in accordance with claim 1, wherein said clamping frame (7) has a vertical junction surface (12) for connecting said centering piece (8).

3. A device in accordance with claim 1 or 2, wherein said clamping frame (7) has a vertical junction surface angularly spaced from vertical for connecting said centering piece (8).

4. A device in accordance with claim 1, wherein said clamping frame (7) and said centering piece (8) are made in one piece.

5. A device in accordance with claim 1 to 4, wherein said prop (9) is a pipe.

## Revendications

1. Dispositif de serrage de pièces (4), notamment de tôles, pendant leur transport dans une chaîne de montage, avec une console (1) constituée de plusieurs pièces préfabriquées, reliées les unes aux autres, à savoir un support de serrage (7) à la base, un appui (3) pour les pièces (4), fixable sur une butée supérieure (2) de la console (1), un tendeur pneumatique (5) fixé sur la butée (2) de la console (1), ledit tendeur pneumatique actionnant un membre de pression (6) tendable contre les pièces (4) qui se trouvent sur l'appui (3), et un montant (9), **caractérisé en ce que** le support de serrage (7) possède une pièce de centrage (8) pour le montant fixable (9), que la butée (2) est formée sur sa face inférieure de manière à constituer un centrage pour le montant (9) qui y est fixable, que la pièce de centrage (8) et la butée (2) présentent des faces de centrage (11/13) qui s'étendent parallèlement à l'axe longitudinal du montant (9) et que la longueur du montant (9) est coupée en fonction du besoin.

2. Dispositif selon la revendication 1 **caractérisé en ce que** le support de serrage (7) possède une surface de raccordement verticale (12) pour la pièce de centrage (8).

3. Dispositif selon la revendication 1 ou 2 **caractérisé en ce que** le support de serrage (7) présente une surface de raccordement inclinée par rapport à la verticale pour la pièce de centrage (8).

4. Dispositif selon la revendication 1 **caractérisé en ce que** le support de serrage (7) et la pièce de centrage (8) sont une construction monobloc.

5. Dispositif selon l'une des revendications 1 à 4 **caractérisé en ce que** le montant (9) est un tube.
